# EUROPEAN PATENT APPLICATION

(11) **EP 4 290 201 A1**
(43) Date of publication of application: **13.12.2023**
(21) Application number: 22178526.4
(22) Date of filing: 10.06.2022
(51) Int. Cl.: G01M 3/02, G01M 3/32

(54) **METHOD FOR GLOVE TESTING AND/OR FOR MANIPULATING A GLOVE, GLOVE SUPPORT, AND GLOVE TESTING ASSEMBLY**

(71) Applicant: SKAN AG, 4123 Allschwil (CH)
(72) Inventor: Dobson, Ian, 4127 Birsfelden (CH); Richardson, Andrew, Michelbach-le-Haut (FR); Landes, Robert, 79713 Bad Säckingen (DE)
(74) Representative: Mertzlufft-Paufler, Cornelius

(57) **Abstract**

A glove testing assembly (1) is described that supports a glove (2) from its inner surface (8) while a negative pressure is applied to the glove interior (37) and/or that can be expanded laterally to spread out the glove (2) (Figure 1).

## Description

The invention concerns a method for glove testing, whereby the glove is attached to an access opening, in particular a port, of a protected region and operable from an outside of the protected region, whereby a negative pressure is applied to a surface of the glove that is oriented towards the outside.

Application of a negative pressure for glove testing is known. For this kind of testing, the glove is inverted and placed, while still being mounted to the access opening, in a pressure chamber outside the protected region. Then, a negative pressure is applied to that chamber. By monitoring the variation of the pressure over time, the presence of even tiny holes can be detected.

The invention concerns further a method for manipulating a glove, whereby the glove has an arm section that is attached to an access opening, in particular a port, of a protected region and a hand section that is located close to or at least partially inside the protected region such that the glove is operable from an outside of the protected region, and whereby at least one, in particular said at least one, supporting element is inserted into the glove from the outside to support the glove longitudinally.

The longitudinal direction may, for example, be characterized as a direction from a proximal end of a glove towards a distal end of the glove and/or as a direction in which an arm is to be inserted into and/or out of a mounted glove.

Moreover, the invention concerns a glove support. Glove supports of the known kind are made of sticks and/or of bent wire that forms an outer contour of a simplified hand.

Glove supports are known to be used to provide a defined position for decontamination purposes.

Finally, the invention concerns a glove testing assembly. Glove testing assemblies are used for in-situ testing of gloves at access openings of protected regions.

The invention poses the problem to simplify glove testing and/or handling.

This problem is solved by the features of claim 1. In particular, to solve the problem, it is proposed according to the invention in a method of the type described at the beginning of this text that the glove is at least partially held back in the protected region while the negative pressure is applied. Thus, the glove can remain in its working orientation and does not need to be inverted. Since inverting a glove takes some time, this greatly simplifies the procedure of glove testing. In addition, the space required outside the protected region can be reduced as there is no need for a chamber that can accommodate a full glove outside the protected region.

For example, but not limiting, a protected region can be characterized in that, an exchange of defined substances across a barrier that defines or limits the protected region, can be controlled. A non-exhaustive list of examples of a protected region comprises clean rooms, isolators, and restricted access barrier systems.

The invention provides a method where the glove, at least in its hand section, needs not to be inverted. The glove support may be formed in an S - form to ensure that the glove does not collapse during testing thus impeding the hole detection. The Glove at least partially held back into protected region, even if it traverses the access opening just once.

According to an embodiment of the invention, at least one supporting element supports the glove longitudinally. Thus, the glove may be held against collapsing due to a negative pressure applied to its inner surface which is, during normal operation, in contact with a hand and/or an arm of a user.

Preferably, the supporting elements may support the glove with its distal end. Thus, the glove may be held and/or stretched over its full length.

In particular, the supporting element may be inserted through the port into the glove. Thus, the glove may be manipulated while being in its operational position.

Alternatively and/or additionally, it may be contemplated that the supporting element has at least one finger or thumb that is to be inserted in one finger or thumb of the glove. Thus, the glove may be held at its fingertips or extremal points.

According to an embodiment of the invention, at least one, in particular said at least one, supporting element supports the glove transversally. Thus, a lateral collapse of the glove may be prevented. In addition, a transversal support may be used to spread out protrusions formed on the glove, e.g., fingers and/or a thumb,

This lateral support may be at least in a region adjacent to the access opening. Thus, an interior space inside the glove may be easily accessible from outside the access opening.

Alternatively or additionally, said lateral support may be at its proximal end. Hence, a proximal end, i.e. an end that is near to a person using the glove, may be accessible for easy inspection and/or maintenance.

Alternatively or additionally, said lateral support may be at its distal end. Hence, an interior space surrounded by a hand part of the glove may be accessible for easy inspection and/or maintenance and/or for spreading the fingers of the glove, in particular during decontamination.

According to an embodiment of the invention, at least one, in particular said at least one, supporting element folds the glove such that an intermediate portion of the arm section runs inside a proximal portion of the arm section that protrudes from the access opening towards the protected region. This may allow to shorten a longitudinal extension of the glove during testing, inspection and/or maintenance.

This folded form may be reached, for example, after an at least partial retraction. Thus, the glove may be easily put into its folded position by retracting the glove through the access opening. The retraction may be described, for example, as directed away from the protected region.

For instance, the retraction may be such that the glove transverses the access opening at least once, preferably at least twice. This allows to perform glove testing within a minimal space and/or basically outside the protected region without the need to invert the hand section of the glove. This is advantageous as inverting the hand section of a glove is cumbersome.

According to an embodiment of the invention, at least a portion of the arm section and/or at least a portion of the hand section is/are supported by a cage-like structure of at least one, in particular said at least one, supporting element. Thus, a particularly simple construction to achieve both lateral support and folding of the glove is described.

According to an embodiment of the invention, at least one, in particular said at least one, supporting element at least partially has a rough surface to establish at least one point-like contact to the glove. A rough surface will result in point-like contacts between supporting element and the glove. This will help to mitigate the effect of self-sealing of holes, where the negative pressure forces a punctured area of the glove against a surface of the glove, thereby sealing the puncture and making it impossible to detect the puncture.

For example, the contact surfaces of the glove support may have a certain surface finish >Ra 3.2 or >VDI3400 Ref 33 (or equivalent surface structure standard) to allow hole detection in positions where the frame contacts the glove.

According to an embodiment of the invention, a vacuum pump unit is attached in particular in an airtight manner, to the port for evacuation of a glove interior. Thus, a negative pressure can be applied to the glove after establishment of its support by the supporting element.

In addtition to the above or alternatively, the problem is solved by the features of the independent claim directed to a method for manipulating a glove. In particular, for a method for manipulating a glove as described above, in order to solve the problem of the invention, it is proposed that, after insertion of the at least one supporting element into the glove, a lateral span of the at least one supporting element is increased, and in that the glove is subsequently manipulated. Thus, it is possible to spread out a hand section of the glove and/or to grip the distal end of the glove. Spreading out the hand section is advantageous for glove testing and for decontaminating the glove inside to protected region. Gripping the glove may be advantageous for retracting the glove.

In an advantageous application, the method for manipulating a glove is a part of the method for glove testing according to the invention, in particular as described herein and/or as claimed in any of the claims that are directed towards a method for glove testing.

According to an embodiment of the invention, the glove is at least partially retracted from the protected region through the access opening.

According to an embodiment of the invention, the at least one supporting element has at least one finger element that is inserted into one finger or thumb of the hand section. Hence, fingers and thumbs may be manipulated separately and/or used for firm grip on a distal end of the glove.

According to an embodiment of the invention, the lateral span of the supporting element is increased by coupling of at least two parts of the supporting element inside the hand section. This provides a simple solution without recurrence to intricate mechanics and/or moveable hinged parts.

According to an embodiment of the invention, the at least two parts of the supporting element have at least one finger element each that is inserted in a corresponding finger of the hand section, preferably before increasing the lateral span. Thus, the fingers of the glove may be stretched.

According to an embodiment of the invention, the supporting element, preferably after the lateral span of the supporting element is increased, is mounted onto the port or a part that is attached to the access opening, for instance a vacuum pump. Thus, a firm base may be provided for longitudinal stretching.

Also, mounting element need not be attached to other parts of the housing of the protected region.

The problem is further solved by a glove support with the features of the independent claim that is directed to a glove support. In particular, it is proposed that the glove support has at least one supporting element with a distal end and a proximal end, whereby the at least one supporting element is operable to increase its lateral span at its distal end. Thus, a lateral dimension of the glove may be increased near its distal end. This may be useful, for instance, during decontamination. Also, the glove may be gripped at its distal end for retraction.

For example, the lateral span may be characterized as an overall extension transversal to a direction that runs from the glove's proximal end to the glove's distal end, at least in some region of the glove, for example in its hand section.

This increase in its lateral span may be achieved, for example, by coupling at least two parts of the at least one supporting element. This provides a particularly simple solution.

Alternatively or additionally, the increase in its lateral span may be achieved by deploying at least one protrusion at or near the distal end of the at least one supporting element. Thus, a number of separate parts that need to be inserted into the glove may be reduced.

According to an embodiment of the invention, the at least one supporting element has a longitudinal part that is operable to support a glove longitudinally. Thus, a longitudinal collapse due to the application of a negative pressure to the glove may be prevented.

According to an embodiment of the invention, the at least one supporting element, in particular at least the longitudinal part of it, is operable to be mounted on an access opening, in particular a port, of a protected region. Thus, a lateral support may be based on a housing of the protected region.

According to an embodiment of the invention, the at least one supporting element has a transversal part that is operable to support a glove transversally. Thus, a lateral collapse of the glove due to negative pressure inside the glove may be avoided.

The glove may, for example, be supported at least in a region adjacent to the access opening. This may be achieved by providing mounting means for mounting the glove support at the access opening. This may be used to prevent the glove to touch the port, which otherwise may result in unintentional sealing of holes in the glove that are located near the port or near the access opening in general.

Alternatively or additionally, the glove may be supported and/or mounted at a proximal end of an arm section of the glove. Thus, a full length of the glove may be supported.

According to an embodiment of the invention, the longitudinal part and the transversal part form a recess that can accommodate an intermediate portion of the arm section, in particular such that the arm section describes, in a longitudinal cross section, an S-form. Thus, a longitudinal length of the glove may be reduced in order to gain space inside the protected region and/or in order to avoid unnecessary large extensions of the glove tester outside the protected region.

According to an embodiment of the invention, the at least one supporting element has at least partially a rough surface to establish point-like contact with a glove. Thus, it can be prevented that the glove sticks to the surface of the supporting element.

According to an embodiment of the invention, the at least one supporting element has at least partially a cage-like structure. This may be used to combine structural stability with the need to contact the glove in small contact regions only.

According to a further solution of the problem, a glove testing assembly has a glove support according to the invention, in particular as described above and/or as claimed in any of claims directed to a glove support, and a pump unit operable to generate a negative pressure and/or to measure a pressure inside the glove. Thus, the invention provides a testing assembly that uses minimal space only and allows to manipulate the glove during maintenance in an easy manner.

The pump unit may, for example, be attached, preferably in an airtight manner, to the access opening.

The invention will now be described with in more detail with reference to the drawings. Additional embodiments may be contemplated by combining the features of at least one independent claim with individual or several features of the dependent claims and/or the embodiments as shown.
- Fig. 1: shows a glove testing assembly during use,
- Fig. 2: shows the glove testing assembly of Fig. 1 in an exploded view,
- Fig. 3: a glove made of one piece in its operational position,
- Fig. 4: a glove made of two connected pieces in its operational position,
- Fig. 5: several steps of assembling the glove support used in Fig. 1 and 2,
- Fig. 6: an alternative way to support the glove of Fig. 1.

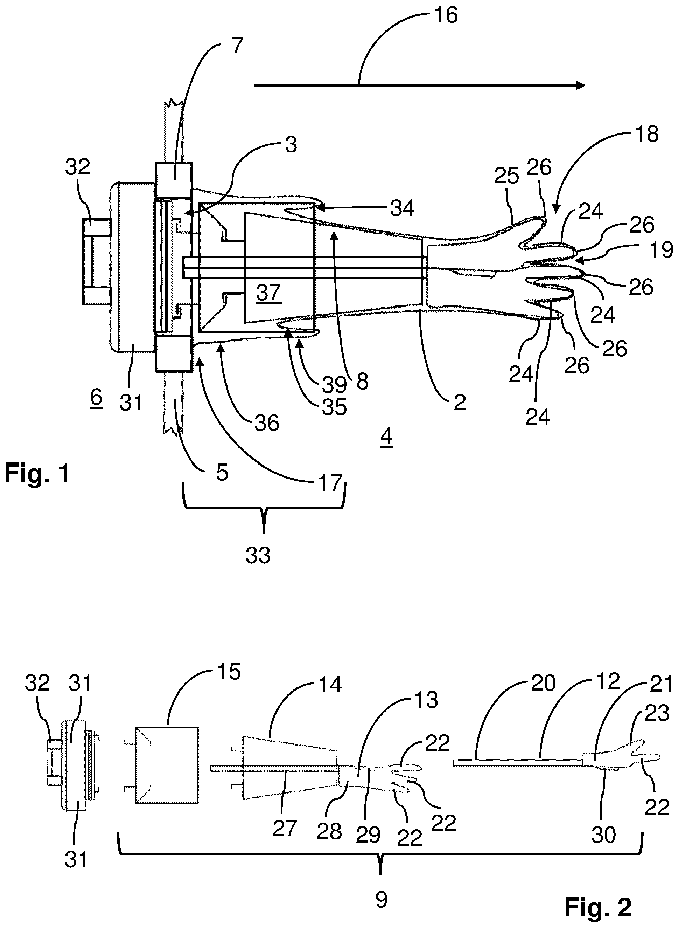

Fig. 1 shows glove testing assembly, generally denoted by 1, that is used for in-situ testing of a glove 2, i.e. a glove that is mounted to an access opening 3 of a protected region 4.

The protected region 4, which may be an insulator for the purpose of explanation, is bound by a wall 5 that has large windows for inspection of the interior from the outside 6.

The access opening 3 is formed as a port 7.

The wall 5 prevents an unwanted exchange of defined substances across it.

It can be said that the glove 2 also separates the protected regions 4 from the outside 6. Thus, its inner surface 8 can be viewed as being oriented towards the outside 6 in the sense that a substance may contact the surface 8 from the outside 6 but not from the protected region 4.

The glove support assembly 1 has a glove support 9, shown in an exploded view in Fig. 2.

During use, the glove 2 is attached to the access opening 3 in an air-tight manner. A person standing on the outside 6 can put its arm into the glove 2 for safe manipulation of objects in the protected region 4 from the outside 6. During use, a hand of an operator will be in direct contact with the surface 8.

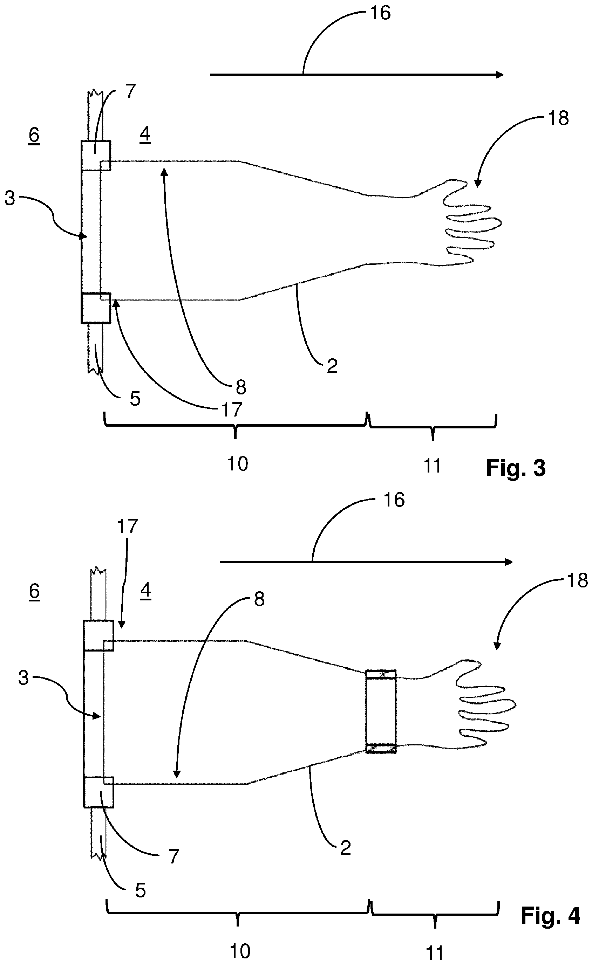

Fig. 3 shows the glove 2 in its maximally extended position. The glove 2 has an arm section 10 and a hand section 11.

Fig. 4 shows an alternative version of a glove 2 where the hand section 11 can be removed from the arm section 10.

As can be seen from a comparison of Fig. 3 to Fig. 1, the glove support 9 may be used to retract the glove 2 from its maximally extended position, i.e. away from the protected region 4.

To arrive at the situation of Fig. 1, a negative pressure is applied to a surface 8 of the glove 2 that is oriented towards the outside 6.

By monitoring the variation of the pressure over time, the presence of even tiny holes can be detected.

As can be seen in Fig. 2, the glove support 9 has several supporting elements 12, 13, 14, 15 that support the glove 2 at least when the negative pressure is applied. The supporting elements 13 and 14 may be connected to each other or formed as separate entities.

When inserted into the glove 2, as shown in Fig. 1, the supporting elements 12, 13, 14, 15 support the glove 2 longitudinally.

Here, the longitudinal direction 16 can be characterized as a direction from a proximal end 17 of the glove 2 towards a distal end 18 of the glove 2. This coincides with a direction in which an arm is to be inserted into and/or out of the mounted glove 2.

From Fig. 1, it can be seen that the glove 2 is partially held back in the protected region 4 while the negative pressure is applied. In other words, the glove 2 remains in its working orientation and does not need to be inverted for testing and/or inspection.

When fully assembled, the glove support 9 supports the glove 2 with its distal end 19.

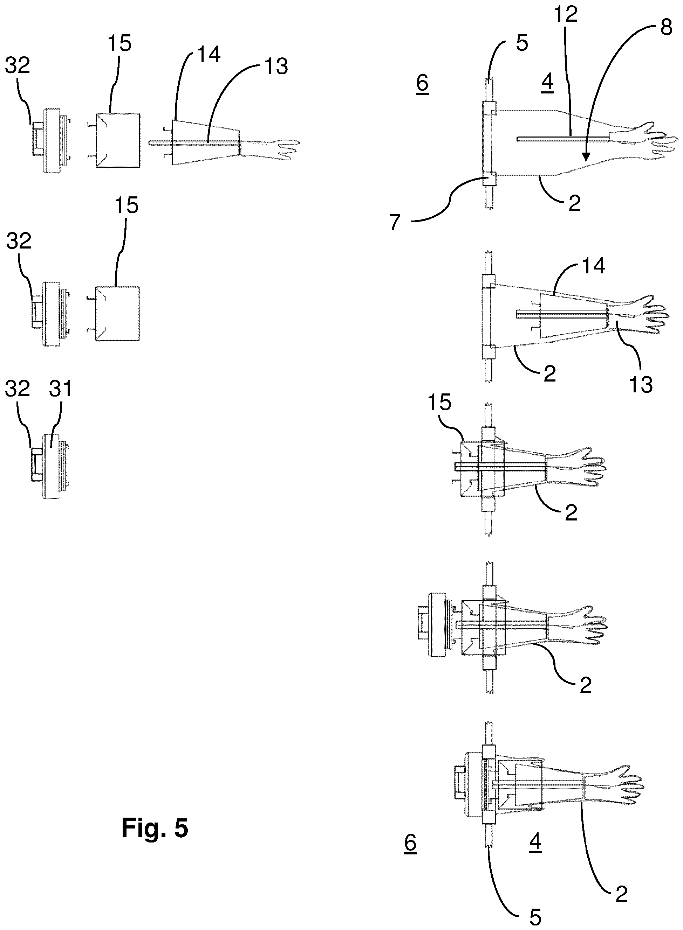

Fig. 5 shows how the supporting elements 12, 13, 14, 15 will be inserted through the port 7 into the glove 2. This will allow the glove 2 to be manipulated while being in its operational position.

Each line in Fig. 5 shows a step of the method. The right column shows that situation at the access opening 3, while the left column of Fig. 5 shows the parts and elements not used so far.

First, the supporting element 12 will be inserted (1st line of Fig. 5).

The supporting element 12 has a rod 20 and a hand part 21 that are attached to each other. The hand part 21 has one finger element 22 and a thumb element 23 (or two finger elements if the thumb is considered to be the particular finger that can be bent against the other fingers).

The finger element 22 goes into a corresponding finger 24 while the thumb element 23 goes into the thumb 25 of the glove 2. Hence, the glove 2 is supported at its five extremal points 26.

Then, the supporting element 13 will be inserted together with the supporting element 14 (2nd line in Fig. 5).

The supporting element 13 has a rod 27 and a hand part 28. The hand part 28 has three finger elements 22 for corresponding fingers 24 of the glove 2.

It may be contemplated, in other examples, that the finger elements 22 may be distributed among the supporting elements 12 and 13 in a different way, that less than four finger elements 22 or no thumb element 23 is present and/or that there are more or less than two supporting elements having finger elements.

Returning to the figures, the hand part 28 has a recess 29 that receives a matching protrusion 30 on the hand part 21. Thus, the supporting elements 13 and 14 will be coupled to each other. In this position, a lateral span of the glove support 9 is increased in comparison to a single supporting element 12, 13.

Hence, the supporting elements 12 and 13 support the glove 2 transversally. Thereby, a lateral collapse of the glove 2 may be prevented. In addition, the hand parts 21, 28 spread out the fingers 24 and the thumb 25.

Then, the supporting elements 12, 13, 14 will be retracted so that the supporting element 14 is accessible from the outside 6.

Next, the supporting element 15 will be assembled and attached to the supporting element 14 (3rd line of Fig. 5).

Finally, a vacuum pump 31 is attached to the supporting element 15 (4th line in Fig. 5) and subsequently to the port 7 (5th line of Fig. 5). The vacuum pump 31 has a handle 32 for easy manipulation.

As described, said lateral support supports the glove 2 at its distal end 18.

However, the lateral support is also developed at the proximal end 17.

It can be seen that the lateral support is expanded in a region 33 adjacent to the access opening 3.

For this, the supporting elements 14 and 15 are formed from a cage, like structure in order to allow minimal contact with the glove

The supporting elements 12, 13 and 14 form a longitudinal part of the glove support 9, while the supporting element 15 may be described as a lateral part.

The supporting element 14 sits partially inside the supporting element 15, thereby creating a recess 34.

Hence, an intermediate portion 35 of the arm section 10 runs inside a proximal portion 36 of the arm section 10 that protrudes from the access opening 4 towards the protected region 4. Thus, an S-form (39) of the arm section 10 of the glove 2 is developed.

This folded form will be reached, for example, after an at least partial retraction, as shown in Fig. 5.

The supporting elements 12, 13, 14, and 15 have rough surfaces (not shown) to establish many point-like contacts to the glove 2.

The vacuum pump 31 is attached in an airtight manner to the port 7 for evacuation of the glove interior 37. For easy installation, the vacuum pump 31 has a handle 32.

The vacuum pump 31 includes a battery for a motor. Also, the vacuum pump 31 has a pressure sensor (not shown) that measures a pressure in the glove interior 37. The measured values are communicated wirelessly so that the vacuum pump 31 does not need any cable connections.

When switched on, the vacuum pump 31 now establishes a negative pressure in the glove interior 37. Measurement of the development of the pressure over time after switching off the vacuum pump 31 will reveal leaks in the glove.

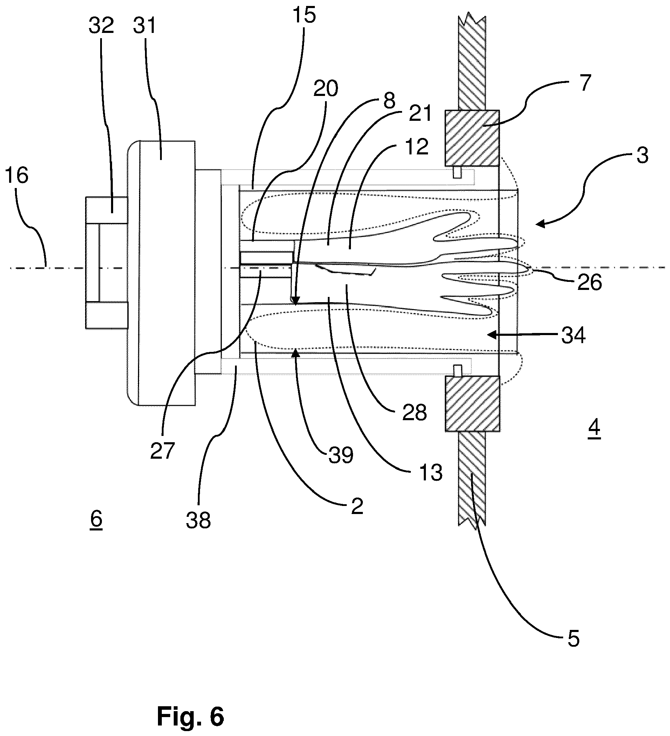

Fig. 6 shows an alternative embodiment. This embodiment has many advantages in particular with respect to usability in machines with light barrier. Similar or identical structures are denoted by the reference numerals of Fig. 1-5. Explanations given for Fig. 1-5 can be read on Fig. 6 as well.

In the embodiment of Fig. 6, after insertion of the supporting elements 12 and 13, the glove 2 (dotted line) is retracted until only one extremal point 26 is protruding into the protected region 4.

Then, an adapter 38 is mounted to the access opening 3 from the outside to accommodate the rods 20, 27 and hand parts 21, 28.

The vacuum pump 31 is mounted to the adapter 38 to seal off the glove interior 37 from the outside 6. The adapter 38 may form a part of the vacuum pump 31 or be integral with it.

After this, a negative pressure can be applied for glove testing.

It can be seen that the glove 2 traverses the access opening 3 two times: first, it is folded to leave the protected region 4, then it is folded again to re-enter the protected region 4. It may, however be retracted such that, although folded twice, it does not re-enter the protected region 4 but stops short of it.

At least a part of the glove 2 adjacent to the access opening 3 is held back inside the protected region 4 by the supporting element 15. The supporting element 15 may be, for example, a cage-like structure.

The double fold may be described as of general S-form.

It can be seen that the hand section 11 is not inverted.

In Fig. 6, the longitudinal direction 16 is shown in addition.

It can be seen that the supporting elements 12, 13, and 15 are mounted to the vacuum pump 31 which is, via the adapter 38, attached to the access opening 3.

Summarizing, a glove testing assembly 1 is described that supports a glove 2 from its inner surface 8 while a negative pressure is applied to the glove interior 37 and/or that can be expanded laterally to spread out the glove 2.

### List of reference numerals

- 1: glove testing assembly
- 2: glove
- 3: access opening
- 4: protected region
- 5: wall
- 6: outside of the protected region
- 7: port
- 8: surface of the glove
- 9: glove support
- 10: arm section of 2
- 11: hand section of 2
- 12: supporting element
- 13: supporting element
- 14: supporting element
- 15: supporting element
- 16: longitudinal direction
- 17: proximal end of 2
- 18: distal end of 2
- 19: distal end of 9
- 20: rod
- 21: hand part
- 22: finger element of the supporting element
- 23: thumb element of the supporting element
- 24: finger of the glove
- 25: thumb of the glove.
- 26: extremal point of 2
- 27: rod
- 28: hand part
- 29: recess
- 30: protrusion
- 31: vacuum pump
- 32: handle
- 33: region adjacent to the access opening
- 34: recess
- 35: intermediate portion of the arm section
- 36: proximal portion of the arm section
- 37: glove interior
- 38: adapter
- 39: S-form

## Claims

1. A method for glove testing (1), whereby the glove (2) is attached to an access opening (3), in particular a port (7), of a protected region (4) and operable from an outside of the protected region (6), whereby a negative pressure is applied to a surface of the glove (8) that is oriented towards the outside, **characterized in that** the glove (2) is at least partially held back in the protected region (4) while the negative pressure is applied, in particular such that a hand section (11) or a distal end (18) of the glove (2) remains oriented towards the protected region (4).

2. The method according to claim 1, **characterized in that** at least one supporting element (12, 13, 14, 15) supports the glove (2) longitudinally, preferably with its distal end (18), in particular wherein the supporting element (12, 13, 14, 15) is inserted through the access opening (3) into the glove (2) and/or has at least one finger or thumb that is to be inserted in one finger or thumb of the glove (2)..

3. The method according to any of the preceding claims, **characterized in that** at least one, in particular said at least one, supporting element (12, 13, 14, 15) supports the glove (2) transversally, in particular at least in a region adjacent to the access opening (3) and/or at its proximal end (17) and/or at its distal end (18), and/or **in that** at least one, in particular said at least one, supporting element (12, 13, 14, 15) folds, in particular after at least partial retraction, the glove (2) such that an intermediate portion of the arm section (35) runs inside a proximal portion of the arm section (36) that protrudes from the access opening (3) towards the protected region (4) and/or such that the glove (2) transverses the access opening (3) at least once, preferably at least twice.

4. The method according to any of the preceding claims, **characterized in that** at least a portion of the arm section (10) and/or at least a portion of the hand section (11) is/are supported by a cage-like structure of at least one, in particular said at least one, supporting element (12, 13, 14, 15), and/or **in that** at least one, in particular said at least one, supporting element (12, 13, 14, 15) at least partially has a rough surface to establish at least one point-like contact to the glove (2).

5. A method for manipulating a glove (2), in particular as a part of the method according to any of the preceding claims, whereby the glove (2) has an arm section (10) that is attached to an access opening (3), in particular a port (7), of a protected region and a hand section (11) that is located close to or at least partially inside the protected region such that the glove (2) is operable from an outside of the protected region (6), and whereby at least one, in particular said at least one, supporting element (12, 13, 14, 15) is inserted into the glove (2) from the outside to support the glove (2) longitudinally, **characterized in that**, after insertion of the at least one supporting element (12, 13, 14, 15) into the glove (2), a lateral span of the at least one supporting element (12, 13, 14, 15) is increased, and **in that** the glove (2) is subsequently manipulated.

6. The method according to any of the preceding claims, **characterized in that** the glove (2) is at least partially retracted from the protected region (4) through the access opening (3) and/or **in that** the at least one supporting element (12, 13, 14, 15) has at least one finger element that is inserted into one finger or thumb of the hand section (11).

7. The method according to any of the preceding claims, **characterized in that** the lateral span of the supporting element (12, 13, 14, 15) is increased by coupling of at least two parts of the supporting element (12, 13, 14, 15) inside the hand section (11) and/or **in that** the at least two parts of the supporting element (12, 13, 14, 15) have at least one finger element each that is inserted in a corresponding finger of the hand section (11), preferably before increasing the lateral span.

8. The method according to any of the preceding claims, **characterized in that** the supporting element (12, 13, 14, 15), preferably after the lateral span of the supporting element (12, 13, 14, 15) is increased, is mounted onto the access opening (3) or a part that is attached to the access opening (3).

9. A glove support (9), having at least one supporting element (12, 13, 14, 15) with a distal end (19) and a proximal end (17), whereby the at least one supporting element (12, 13, 14, 15) is operable to increase its lateral span at its distal end (19), in particular by coupling at least two parts of the at least one supporting element (12, 13, 14, 15) and/or by deploying at least one protrusion (30) at or near the distal end (19) of the at least one supporting element (12, 13, 14, 15).

10. The glove support (9) according to claim 9, **characterized in that** the at least one supporting element (12, 13, 14, 15) has a longitudinal part that is operable to support a glove (2) longitudinally and/or **in that** the supporting element (12, 13, 14, 15), in particular at least the longitudinal part of it, is operable to be mounted on an access opening (3), in particular a port (7), of a protected region (4).

11. The glove support (9) according to claim 9 or 10, **characterized in that** the at least one supporting element (12, 13, 14, 15) has a transversal part that is operable to support a glove (2) transversally, in particular at least in a region adjacent to the access opening (3) and/or in a proximal end (17) of an arm section (36) of the glove (2).

12. The glove support (9) according to any of the claims 9 to 11, **characterized in that** the longitudinal part (and the transversal part form a recess (34) that can accommodate an intermediate portion of the arm section (35), in particular such that the arm section (10) describes, in a longitudinal cross-section, an S-form (39) and/or such that the glove (2) traverses the access opening (3) at least once or at least twice.

13. The glove support (9) according to claim any of the claims 9 to 12, **characterized in that** the at least one supporting element (12, 13, 14, 15) has at least partially a rough surface to establish point-like contact with a glove (2).

14. The glove support (9) according to claim any of the claims 9 to 13, **characterized in that** the at least one supporting element (12, 13, 14, 15) has at least partially a cage-like structure.

15. A glove testing assembly (1) with a glove support (9) according to any of claims 9 to 14 and with a pump unit operable to generate a negative pressure and/or to measure a pressure inside the glove (2), in particular whereby the pump unit is attached, preferably in an airtight manner, to the access opening (3).
